# EUROPEAN PATENT APPLICATION

(11) **EP 3 882 618 A1**
(43) Date of publication of application: **22.09.2021**
(21) Application number: 19899743.9
(22) Date of filing: 28.08.2019
(51) Int. Cl.: G01N 27/416

(54) **ANALYSIS DEVICE**

(30) Priority: 18.12.2018 JP 2018236069
(71) Applicant: HORIBA Advanced Techno, Co., Ltd., Minami-ku Kyoto-shi Kyoto 601-8306 (JP)
(72) Inventor: SUZUKI, Riichiro, Kyoto-shi, Kyoto 601-8306 (JP); KURAMOTO, Hisanori, Kyoto-shi, Kyoto 601-8306 (JP); INOUE, Kentaro, Kyoto-shi, Kyoto 601-8306 (JP)
(74) Representative: Müller-Boré & Partner Patentanwälte PartG mbB
(86) International application number: PCT/JP2019/033767
(87) International publication number: WO 2020/129313

(57) **Abstract**

The present invention can perform, when analyzing ammonia water containing hydrogen gas using a platinum electrode, a process for improving a drift of potential difference generated between a working electrode and a reference electrode in relatively a short time without a need of another instrument. The present invention provides an analysis device that electrochemically analyzes ammonia water containing hydrogen gas, the device including: a working electrode that is made of platinum and that is to be immersed in the ammonia water; a counter electrode that is to be immersed in the ammonia water together with the working electrode; a power circuit that applies a voltage between the working electrode and the counter electrode; and a control unit that controls the power circuit, in which the control unit includes a working electrode restoration unit that applies a voltage between the working electrode and the counter electrode by the power circuit such that the working electrode has a higher potential.

## Description

### Technical Field

The present invention relates to an analysis device.

### Background Art

In recent years, in a cleaning step for cleaning semiconductors in a semiconductor manufacturing process, ammonia water containing hydrogen gas is used as cleaning water. As the cleaning water, electrolyzed water generated on a cathode side by electrolysis of ammonia water is commonly used.

Meanwhile, when the electrolyzed water is generated, an analysis device disclosed in Patent Literature 1 is used, for example, in order to assess whether or not the electrolyzed water is normally generated.

Note that, when the electrolyzed water is assessed by the analysis device, a working electrode and a reference electrode are immersed in the electrolyzed water, a potential difference (redox potential) generated between the two electrodes is detected, and it is assessed whether or not the electrolyzed water is normal on the basis of the detected value. Specifically, when the working electrode and the reference electrode are immersed in the electrolyzed water for a certain period of time, the redox reaction is at equilibrium, so that the potential difference generated between the working electrode and the reference electrode is stabilized. The stabilized potential difference is set as a normal value, and it is assessed whether or not the electrolyzed water is normal by referring to the deviation of a detected value with respect to the normal value.

### Citation List

### Patent Literature

Patent Literature 1: JP 2006-153677 A

### Summary of Invention

### Technical Problem

Meanwhile, the inventors of the present invention have found during repeated assessment experiments of electrolyzed water by the analysis device that, when an electrode made of platinum (hereinafter referred to as a platinum electrode) is selected as the working electrode, a potential difference generated between the working electrode and the reference electrode increases as compared to the case where an electrode made of other materials (for example, gold) is selected, and thus a highly accurate assessment can be carried out. Incidentally, when a working electrode made of platinum and a reference electrode prepared by coating a surface of a rod made of silver with silver chloride are used, a potential difference having a normal value of about -900 mV is generated.

On the other hand, it has been found that, when the platinum electrode and the reference electrode are immersed in the electrolyzed water for a long time (about 1 to 3 days), a phenomenon occurs in which the potential difference generated between the working electrode and the reference electrode significantly drifts from the normal value despite the electrolyzed water being normal, and an assessment of whether or not the electrolyzed water is normal is impossible due to such phenomenon.

Notably, it is considered that the above phenomenon is caused by a strong catalytic effect of the platinum electrode. More specifically, the platinum electrode captures and stores therein electrons of hydrogen molecules (H₂) present in the electrolyzed water due to its strong catalytic effect. On the other hand, the hydrogen atom from which an electron is captured into the platinum electrode is attracted by the electron and adheres to the surface of the platinum electrode. Note that, when the number of hydrogen atoms adhering to the surface of the platinum electrode increases, the electrons stored inside the platinum electrode are also attracted by the hydrogen atoms and move to the surface side of the platinum electrode. As a result, the electrons inside the platinum electrode and the hydrogen atoms on the surface of the platinum electrode are strongly attracted to each other, so that a membrane of hydrogen atoms is formed on the surface of the platinum electrode. Further, ammonia gas (NH₃) present in the electrolyzed water is adsorbed on the hydrogen atoms, so that a membrane of ammonia gas is further formed on the membrane of the hydrogen atoms.

As a result, these membranes inhibit the catalytic effect of the platinum electrode, resulting in that the redox reaction hardly occurs, and thus, the potential difference generated between the working electrode and the reference electrode gradually decreases. This is presumed to be the cause of the phenomenon.

Incidentally, the abovementioned problem can be improved by regularly performing a process of polishing the surface of the working electrode or immersing the working electrode in a strong acid or an oxidizing agent, but in order to carry out such a process, measurement by the analysis device needs to be stopped for a long time, and further, it is also necessary to prepare abrasives, reagents, etc. separately and perform such a process manually, which is extremely troublesome.

In view of this, a main object of the present invention is to address a new problem caused by the abovementioned phenomenon which has not been known in the past. Specifically, the present invention mainly aims to provide an analysis device that, when analyzing (assessing) ammonia water containing hydrogen gas using a platinum electrode, can perform a process (work) for improving a drift of potential difference generated between a working electrode and a reference electrode in relatively a short time without a need of another instrument.

### Solution to Problem

That is, an analysis device according to the present invention is an analysis device that electrochemically analyzes ammonia water containing hydrogen gas, and includes: a working electrode that is made of platinum and that is to be immersed in the ammonia water; a counter electrode that is to be immersed in the ammonia water together with the working electrode; a power circuit that applies a voltage between the working electrode and the counter electrode; and a control unit that controls the power circuit, in which the control unit includes a working electrode restoration unit that applies a voltage between the working electrode and the counter electrode by the power circuit such that the working electrode has a higher potential.

With this configuration, due to application of voltage between the working electrode and the counter electrode by the power circuit such that the working electrode has a higher potential, hydrogen atoms covering the surface of the working electrode can be oxidized to hydrogen ions, and ammonia gas can be oxidized to hydrazine (N₂H₄). Thus, hydrogen atoms and ammonia gas are separated from the surface of the working electrode, whereby the catalytic effect of the working electrode can be restored without preparing another instrument. In addition, such a method shortens the time required for restoration of the working electrode as compared with a method such as polishing.

Note that, when the counter electrode is a reference electrode, a reduction reaction of the reference electrode proceeds by application of a voltage between the working electrode and the reference electrode, which affects the stability of the potential difference generated between the working electrode and the reference electrode. In view of this, the control unit may further include a reference electrode restoration unit that applies a voltage between the working electrode and the counter electrode by the power circuit such that the reference electrode has a higher potential after the application of the voltage by the working electrode restoration unit.

With this configuration, due to application of voltage between the working electrode and the reference electrode by the power circuit such that the reference electrode has a higher potential, the reference electrode in which the reduction reaction proceeds with the application of the voltage can be restored.

Note that the potential difference generated between the working electrode and the reference electrode suddenly begins to drift after a certain period of time. Therefore, the working electrode restoration unit may be configured to apply a voltage by the power circuit when a state where no voltage is applied between the working electrode and the counter electrode by the power circuit continues for a predetermined time.

With this configuration, hydrogen atoms and ammonia gas adhering to the surface of the working electrode can be periodically removed, whereby a state where the potential difference generated between the working electrode and the reference electrode has substantially no drift can be maintained.

In this case, the progression of the reduction reaction of the reference electrode may not be so much as to affect the stability of the potential difference generated between the working electrode and the reference electrode only by one or two applications of voltage by the working electrode restoration unit. Therefore, the reference electrode restoration unit may be configured to apply a voltage by the power circuit after the working electrode restoration unit applies a voltage a predetermined number of times.

With this configuration, the number of operations for restoring the reference electrode can be reduced, and as a result, the downtime of the analysis device for measurement can be shortened.

Further, the analysis device may further include: a detection circuit that detects a potential difference generated between the working electrode and the reference electrode; and a potential difference storage unit that stores a detection value detected by the detection circuit, in which the control unit may further include a return preparation unit that, after application of voltage by the working electrode restoration unit, or the working electrode restoration unit and the reference electrode restoration unit, applies, by the power circuit, a voltage according to the potential difference stored in the potential difference storage unit before the application. Note that, specifically, the potential difference storage unit stores a detection value detected by the detection circuit in a state where no voltage is applied between the working electrode and the reference electrode by the power circuit.

When the working electrode restoration unit or the reference electrode restoration unit applies a voltage, the potential difference between the working electrode and the reference electrode deviates significantly from the normal value. In view of this, after application of voltage by the working electrode restoration unit and the reference electrode restoration unit, a voltage is applied so that the potential difference between the working electrode and the reference electrode approaches the normal value. Thus, a return time from the restoration treatment state to the measurement state can be shortened.

In addition, a treatment method for an analysis device according to the present invention is a treatment method for an analysis device that detects a potential difference generated between a working electrode made of platinum and a reference electrode by immersing the working electrode and the reference electrode in ammonia water containing hydrogen gas, the method comprising applying periodically a voltage between the working electrode and the counter electrode such that the working electrode has a higher potential after the working electrode and the reference electrode are immersed in the ammonia water.

In addition, an electrode restoration device according to the present invention is an electrode restoration device used for an analysis device that detects a potential difference generated between a working electrode made of platinum and a reference electrode by immersing the working electrode and the reference electrode in ammonia water containing hydrogen gas, the electrode restoration device comprising: a power circuit that is connected between the working electrode and the reference electrode; and a control unit that controls the power circuit, in which the control unit includes a working electrode restoration unit that applies a voltage between the working electrode and the counter electrode by the power circuit such that the working electrode has a higher potential.

According to the analysis device thus configured, when ammonia water containing hydrogen gas is analyzed using a platinum electrode, a process for improving a drift of potential difference generated between the working electrode and the reference electrode can be performed in relatively a short time without a need of another instrument.

### Brief Description of Drawings

FIG. 1 is a schematic diagram showing an analysis device according to a first embodiment.
FIG. 2 is a block diagram showing a control unit of the analysis device according to the first embodiment.
FIG. 3 is a graph showing a relation between a potential difference generated between a working electrode and a reference electrode of the analysis device according to the first embodiment and time.
FIG. 4 is a schematic diagram showing an analysis device according to a second embodiment.

### Reference Signs List

- 100: analysis device
- W: electrolyzed water
- 10: working electrode
- 20: reference electrode
- 30: detection circuit
- 40: potential difference storage unit
- 50: power circuit
- 60: control unit
- 61: working electrode restoration unit
- 62: reference electrode restoration unit
- 63: return preparation unit

### Description of Embodiments

An analysis device according to the present invention will be described below with reference to the drawings.

The analysis device according to the present invention is used for analyzing ammonia water containing hydrogen gas. Specifically, it is used for analyzing hydrogen gas-containing ammonia water which is used as cleaning water in a cleaning step of a semiconductor manufacturing process. More specifically, it is used to assess (analyze) whether or not electrolyzed water generated on a cathode side by electrolysis of ammonia water is normally generated.

### <First embodiment>

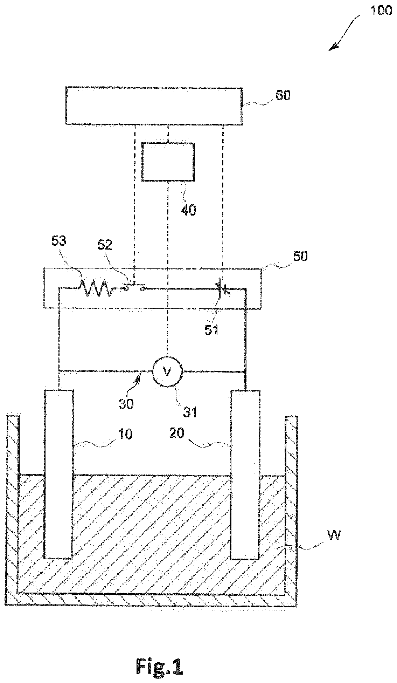

As shown in FIG. 1, an analysis device 100 according to the present embodiment is provided with: a working electrode 10 that is to be immersed in electrolyzed water W (ammonia water containing hydrogen gas); a reference electrode 20 that is to be immersed in the electrolyzed water W together with the working electrode 10; a detection circuit 30 that detects a potential difference generated between the working electrode 10 and the reference electrode 20; a potential difference storage unit 40 that stores a detection value detected by the detection circuit 30; a power circuit 50 for applying a voltage between the working electrode 10 and the reference electrode 20; and a control unit 60 that controls the power circuit 50.

The working electrode 10 is made of platinum. The working electrode 10 in the present embodiment is a rod made of platinum. Note that the working electrode 10 may be made of palladium. In addition, the reference electrode 20 is made of silver chloride (AgCl) and silver (Ag). The reference electrode 20 in the present embodiment has a structure in which a layer made of silver chloride is formed on the surface of a rod made of silver. Note that, in the present embodiment, the reference electrode 20 corresponds to a counter electrode in claims.

The detection circuit 30 is connected between the working electrode 10 and the reference electrode 20. Specifically, the detection circuit 30 includes a voltmeter 31 connected between the working electrode 10 and the reference electrode 20.

The potential difference storage unit 40 is for storing a potential difference generated between the working electrode 10 and the reference electrode 20 detected by the voltmeter 31 of the detection circuit 30. Note that, specifically, the potential difference storage unit 40 is configured to store the potential difference detected by the voltmeter 31 in a state where no voltage is applied between the working electrode 10 and the reference electrode 20 by the power circuit 50. It is to be noted that the potential difference storage unit 40 may be provided in the control unit 60.

The power circuit 50 is for applying a voltage between the working electrode 10 and the reference electrode 20. Specifically, the power circuit 50 in the present embodiment includes: a voltage generator 51 capable of variably setting a DC voltage; a switch 52 for turning on or off the connection of the voltage generator 51 to the working electrode 10 and the reference electrode 20; and a current limiting resistor 53 that limits a current supplied between the working electrode 10 and the reference electrode 20 from the voltage generator 51, and the voltage generator 51, the switch 52, and the current limiting resistor 53 are connected in series between the working electrode 10 and the reference electrode 20.

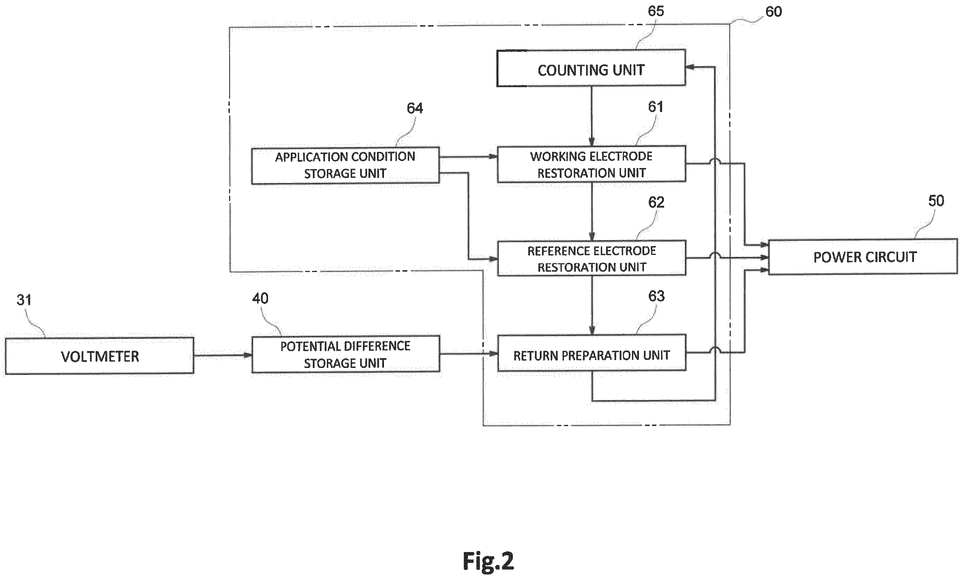

The control unit 60 is connected to the voltmeter 31, the voltage generator 51, and the switch 52. The control unit 60 is, for example, a computer provided with a CPU, a memory, an input/output means, an A/D or D/A converter, and the like, and is configured to exhibit functions as a working electrode restoration unit 61, a reference electrode restoration unit 62, a return preparation unit 63, an application condition storage unit 64, and a counting unit 65 according to a control program stored in the memory as shown in FIG. 2.

The working electrode restoration unit 61 applies a voltage (hereinafter, also referred to as a working electrode restoration voltage) between the working electrode 10 and the reference electrode 20 using the power circuit 50 such that the working electrode 10 has a higher potential. Specifically, the working electrode restoration unit 61 executes a working electrode restoration treatment for applying a voltage for a duration of a time period (hereinafter referred to as a working electrode restoration time) required for oxidizing (restoring) the working electrode 10 to some extent. Note that, for example, a voltage that provides a potential difference of 500 mV to 1000 mV between the working electrode 10 and the reference electrode 20 is used as the working electrode restoration voltage, and the working electrode restoration time is 1 to 5 seconds.

Further, the working electrode restoration unit 61 is configured to apply a voltage by the power circuit 50 when a state in which no voltage is applied between the working electrode 10 and the reference electrode 20 by the power circuit 50 continues for a predetermined time. Here, the predetermined time is specifically a time selected from a period (measurement period) in which a state where the potential difference generated between the working electrode 10 and the reference electrode 20 is stable (in other words, an equilibrium state where the potential difference is nearly a normal value) is maintained. More specifically, the predetermined time is a time selected from the period from when the potential difference generated between the working electrode 10 and the reference electrode 20 is stable (equilibrium state) until it drifts (until it is in a non-equilibrium state). For example, the predetermined time is 1 to 3 days.

The reference electrode restoration unit 62 applies a voltage (hereinafter, also referred to as a reference electrode restoration voltage) between the working electrode 10 and the reference electrode 20 using the power circuit 50 such that the reference electrode 20 has a higher potential, after the working electrode restoration unit 61 executes the working electrode restoration treatment. Specifically, the reference electrode restoration unit 62 executes a reference electrode restoration treatment for applying a voltage for a duration of a time period (hereinafter referred to as a reference electrode restoration time) required for oxidizing (restoring) the reference electrode 20 to some extent after the application of voltage by the working electrode restoration unit 61. Note that, for example, a voltage that provides a potential difference of -500 mV to -1000 mV between the working electrode 10 and the reference electrode 20 is used as the reference electrode restoration voltage, and the reference electrode restoration time is 1 to 5 seconds.

The return preparation unit 63 applies a voltage (hereinafter, also referred to as a return voltage) between the working electrode 10 and the reference electrode 20 using the power circuit 50 after the reference electrode restoration unit 62 executes the reference electrode restoration treatment. Specifically, the return preparation unit 63 executes a return treatment for applying voltage between the working electrode 10 and the reference electrode 20 such that the potential difference between the working electrode 10 and the reference electrode 20 is equal to the potential difference indicated by the detection value (specifically, detection value stored in the potential difference storage unit 40 before the application of voltage by the working electrode restoration unit 61, in other words, the latest detection value) stored in the potential difference storage unit 40.

The application condition storage unit 64 stores application conditions of the working electrode restoration unit 61 and the reference electrode restoration unit 62. Specifically, the application condition storage unit 64 stores application conditions such as the working electrode restoration voltage, the working electrode restoration time, the reference electrode restoration voltage, and the reference electrode restoration time. It should be noted that some or all of these application conditions may be input by an input means (not shown). Then, the working electrode restoration unit 61 and the reference electrode restoration unit 62 determine the application conditions by referring to the application condition storage unit 64.

The counting unit 65 counts the predetermined time. Specifically, the counting unit 65 starts counting when the potential difference generated between the working electrode 10 and the reference electrode 20 is at equilibrium after the working electrode 10 and the reference electrode 20 are immersed in the electrolyzed water W. In addition, after the first electrode return treatment (treatment including the working electrode restoration treatment, the reference electrode restoration treatment, and the return treatment) is completed, the counting unit 65 starts counting every time the electrode restoration treatment is completed. Note that the counting unit 65 may start counting in response to a start signal.

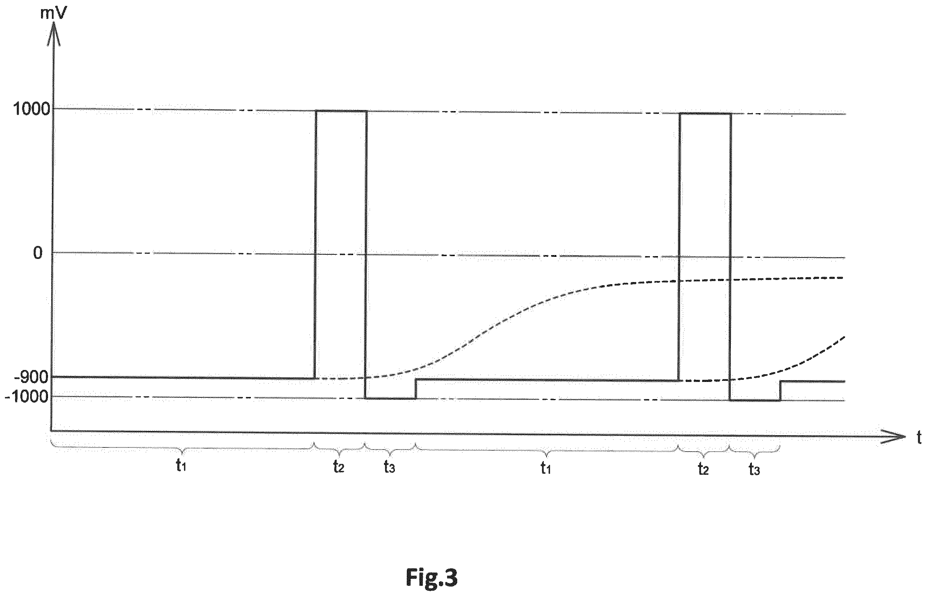

Next, the operation of the analysis device 100 according to the present embodiment will be described with reference to FIG. 3. In FIG. 3, the potential difference generated between the working electrode 10 and the reference electrode 20 when the electrode restoration treatment is executed is indicated by a thick solid line, and the potential difference generated between the working electrode 10 and the reference electrode 20 when the electrode restoration treatment is not executed is indicated by a dotted line. Further, in FIG. 3, t₁ indicates the predetermined time, t₂ indicates the working electrode restoration time, and t₃ indicates the reference electrode restoration time.

First, the working electrode 10 and the reference electrode 20 are immersed in the electrolyzed water W. As a result, a redox reaction occurs between the working electrode 10 and the reference electrode 20, and a potential difference is generated between the working electrode 10 and the reference electrode 20. This potential difference is detected by the voltmeter 31 and stored in the potential difference storage unit 40. Then, when the potential difference is stabilized after the working electrode 10 and the reference electrode 20 are immersed in the electrolyzed water W, in other words, after a potential difference is generated between the working electrode 10 and the reference electrode 20, the counting unit 65 starts counting.

Next, when the count of the counting unit 65 reaches the predetermined time t₁, the working electrode restoration unit 61 adjusts the voltage of the voltage generator 51 by referring to the application condition storage unit 64. Then, the working electrode restoration unit 61 turns on the switch 52 during the time t₂, and executes the working electrode restoration treatment of applying a voltage between the working electrode 10 and the reference electrode 20. Thus, a voltage is applied between the working electrode 10 and the reference electrode 20 so that the working electrode 10 has a higher potential. As a result, an oxidation reaction occurs in the working electrode 10, by which hydrogen atoms and ammonia gas are separated, while a reduction reaction occurs in the reference electrode 20, by which silver chloride is turned into silver.

Next, after the working electrode restoration unit 61 executes the working electrode restoration treatment, the reference electrode restoration unit 62 adjusts the voltage of the voltage generator 51 by referring to the application condition storage unit 64. Then, the reference electrode restoration unit 62 turns on the switch 52 during the time t₃, and executes the reference electrode restoration treatment of applying a voltage between the working electrode 10 and the reference electrode 20. With this treatment, a voltage is applied between the working electrode 10 and the reference electrode 20 so that the reference electrode 20 has a higher potential. As a result, a reduction reaction occurs in the working electrode 10, while an oxidation reaction occurs in the reference electrode 20, by which silver is turned into silver chloride. Note that the reduction reaction that occurs at the working electrode 10 at this time is so slight that it does not affect the catalytic effect of the working electrode 10.

Next, after the reference electrode restoration unit 62 executes the reference electrode restoration treatment, the return preparation unit 63 adjusts the voltage of the voltage generator 51 by referring to the potential difference stored in the potential difference storage unit 40. Then, the return preparation unit 63 temporarily turns on the switch 52 to execute the return treatment of applying a voltage between the working electrode 10 and the reference electrode 20. Specifically, the return preparation unit 63 applies a voltage corresponding to the latest potential difference stored in the potential difference storage unit 40.

Then, when the return preparation unit 63 executes the return treatment, the counting unit 65 determines that the electrode restoration treatment is completed, and then, resets the count and newly starts counting.

Thus, the control unit 60 periodically executes the series of electrode restoration treatments (working electrode restoration treatment, reference electrode restoration treatment, and return treatment) on the working electrode 10 and the reference electrode 20. Note that, although the reference electrode restoration treatment is executed every time the working electrode restoration treatment is executed in the present embodiment, the reference electrode restoration treatment may be executed once after the working electrode restoration treatment is executed multiple times.

### <Second embodiments

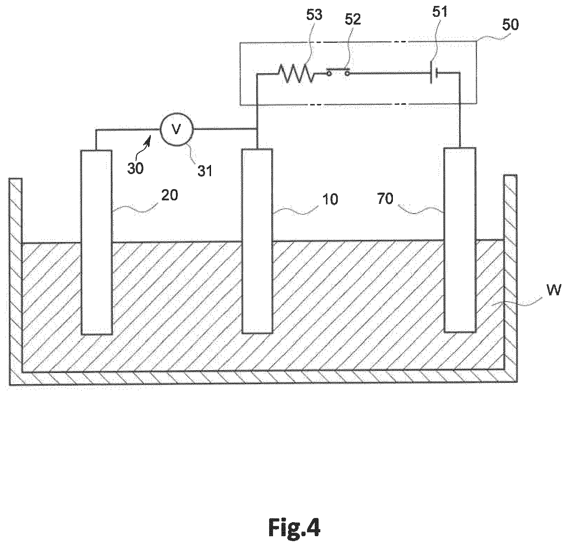

This embodiment is a modification of the analysis device 100 according to the first embodiment. As shown in FIG. 4, the analysis device 100 according to the present embodiment includes, as an electrode to be immersed in the electrolyzed water W, a working electrode restoration electrode 70 that is used for the working electrode restoration treatment, in addition to the working electrode 10 and the reference electrode 20, and further includes a power circuit 50 connected between the working electrode 10 and the working electrode restoration electrode 70. An electrode made of carbon may be used as the working electrode restoration electrode 70. Note that, in the present embodiment, the working electrode restoration electrode 70 corresponds to a counter electrode in claim 1.

The power circuit 50 has the same configuration as the power circuit 50 according to the first embodiment, except that the voltage generator 51 is changed to a non-variable type. As in the first embodiment, the detection circuit 30 provided with the voltmeter 31 is connected between the working electrode 10 and the reference electrode 20.

With the configuration described above, even if a voltage at which the working electrode 10 has a higher potential is applied between the working electrode 10 and the working electrode restoration electrode 70 by the power circuit 50, no voltage is applied to the reference electrode 20 at that time. Therefore, the reduction reaction of the reference electrode 20 does not proceed by the working electrode restoration treatment, whereby it is not necessary to execute the reference electrode restoration treatment.

### <Other embodiments>

In the above embodiments, the voltage applied between the working electrode 10 and the reference electrode 20 is adjusted by the voltage generator 51 capable of variably setting the voltage in the power circuit 50. However, the power circuit 50 may be provided with processing circuits respectively corresponding to the working electrode restoration treatment, the reference electrode restoration treatment, and the return treatment, for example. In this case, the voltage generator 51, the switch 52, and the current limiting resistor 53 may be provided in each processing circuit.

Further, in the above embodiments, the timing of executing the working electrode restoration treatment (electrode restoration treatment) is controlled by time, but the present invention is not limited thereto. For example, the potential difference generated between the working electrode 10 and the reference electrode 20 detected by the voltmeter 31 may be referred to, and when the potential difference is equal to or greater than a threshold, the working electrode restoration treatment may be executed.

Further, the power circuit 50 and the control unit 60 in the first embodiment may be detachably connected to the working electrode 10 and the reference electrode 20 as an electrode restoration device. In this case, the electrode restoration device may be further provided with the detection circuit 30 and the potential difference storage unit 40. With the configuration described above, the electrode restoration device can be detachably attached to the working electrode 10 and the reference electrode 20 which are immersed in ammonia water.

In addition, the present invention is not limited to the abovementioned embodiments, and it is obvious that various modifications are possible without departing from the spirit of the present invention.

### Industrial Applicability

When ammonia water containing hydrogen gas is analyzed (assessed) using a platinum electrode, it is possible to execute a process (work) for improving a drift of potential difference generated between a working electrode and a reference electrode in relatively a short time without a need of another instrument.

## Claims

1. An analysis device that electrochemically analyzes ammonia water containing hydrogen gas, the device comprising:
a working electrode that is made of platinum and that is to be immersed in the ammonia water;
a counter electrode that is to be immersed in the ammonia water together with the working electrode;
a power circuit that applies a voltage between the working electrode and the counter electrode; and
a control unit that controls the power circuit, wherein
the control unit includes a working electrode restoration unit that applies a voltage between the working electrode and the counter electrode by the power circuit such that the working electrode has a higher potential.

2. The analysis device according to claim 1, wherein
the counter electrode is a reference electrode, and
the control unit further includes a reference electrode restoration unit that applies a voltage between the working electrode and the counter electrode by the power circuit such that the reference electrode has a higher potential after the application of voltage by the working electrode restoration unit.

3. The analysis device according to claim 1 or 2, wherein
the working electrode restoration unit applies a voltage by the power circuit when a state where no voltage is applied between the working electrode and the counter electrode by the power circuit continues for a predetermined time.

4. The analysis device according to claim 3, wherein the reference electrode restoration unit applies a voltage by the power circuit after the working electrode restoration unit applies a voltage a predetermined number of times.

5. The analysis device according to any one of claims 1 to 4, further comprising:
a detection circuit that detects a potential difference generated between the working electrode and the reference electrode; and
a potential difference storage unit that stores a detection value detected by the detection circuit, wherein
the control unit further includes a return preparation unit that, after application of voltage by the working electrode restoration unit, or the working electrode restoration unit and the reference electrode restoration unit, applies, by the power circuit, a voltage according to a potential difference stored in the potential difference storage unit before the application.

6. The analysis device according to claim 5, wherein the potential difference storage unit stores a detection value detected by the detection circuit in a state where no voltage is applied between the working electrode and the reference electrode by the power circuit.

7. A treatment method for an analysis device that detects a potential difference generated between a working electrode made of platinum and a reference electrode by immersing the working electrode and the reference electrode in ammonia water containing hydrogen gas, the method comprising
applying periodically a voltage between the working electrode and the counter electrode such that the working electrode has a higher potential after the working electrode and the reference electrode are immersed in the ammonia water.

8. An electrode restoration device used for an analysis device that detects a potential difference generated between a working electrode made of platinum and a reference electrode by immersing the working electrode and the reference electrode in ammonia water containing hydrogen gas, the electrode restoration device comprising:
a power circuit that is connected between the working electrode and the reference electrode; and
a control unit that controls the power circuit, wherein
the control unit includes a working electrode restoration unit that applies a voltage between the working electrode and the reference electrode by the power circuit such that the working electrode has a higher potential.
